(19) Europäisches Patentamt
European Patent Office
Office européen des brevets

(11) **EP 4 447 201 B1**

(12) **EUROPEAN PATENT SPECIFICATION**

(45) Date of publication and mention
of the grant of the patent:
**01.07.2026 Bulletin 2026/27**

(51) International Patent Classification (IPC):
*H01M 10/659* (2014.01)   *H01M 10/613* (2014.01)
*H01M 10/6554* (2014.01)   *H01M 10/651* (2014.01)
*H01M 10/653* (2014.01)   *H01M 50/204* (2021.01)
*H01M 10/647* (2014.01)   *C09K 5/04* (2006.01)

(21) Application number: 23877611.6

(22) Date of filing: 10.10.2023

(52) Cooperative Patent Classification (CPC):
H01M 50/204; C09K 5/04; H01M 10/613;
H01M 10/625; H01M 10/647; H01M 10/651;
H01M 10/653; H01M 10/6554; H01M 10/6555;
H01M 10/659; H01M 50/211; H01M 50/224;
H01M 2220/20; Y02E 60/10

(86) International application number:
**PCT/KR2023/015476**

(87) International publication number:
**WO 2024/080683 (18.04.2024 Gazette 2024/16)**

(54) **SECONDARY BATTERY MODULE HAVING IMPROVED STABILITY OF TEMPERATURE INSIDE MODULE**

SEKUNDÄRBATTERIEMODUL MIT VERBESSERTER TEMPERATURSTABILITÄT IM MODUL

MODULE DE BATTERIE SECONDAIRE PRÉSENTANT UNE STABILITÉ AMÉLIORÉE DE TEMPÉRATURE À L'INTÉRIEUR D'UN MODULE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **14.10.2022 KR 20220132265**

(43) Date of publication of application:
**16.10.2024 Bulletin 2024/42**

(73) Proprietor: **LG Energy Solution, Ltd.**
**Seoul 07335 (KR)**

(72) Inventors:
• **HWANG, Won Pill**
**Daejeon 34122 (KR)**
• **LEE, Yong Ho**
**Daejeon 34122 (KR)**
• **LEE, Jin Kyu**
**Daejeon 34122 (KR)**
• **YOON, Doo Han**
**Daejeon 34122 (KR)**

• **SON, Chang Keun**
**Daejeon 34122 (KR)**
• **KIM, Sun Jae**
**Daejeon 34122 (KR)**

(74) Representative: **Plasseraud IP**
**104 Rue de Richelieu**
**CS92104**
**75080 Paris Cedex 02 (FR)**

(56) References cited:
EP-A1- 4 489 185       CN-A- 106 953 137
JP-A- 2001 185 205       JP-A- 2016 092 810
KR-A- 20110 070 199       KR-A- 20210 109 316
US-A1- 2010 028 758       US-A1- 2019 093 958

• WU NAN ET AL: "Passive thermal management systems employing hydrogel for the large-format lithium-ion cell: A systematic study", ENERGY, ELSEVIER, AMSTERDAM, NL, vol. 231, 16 May 2021 (2021-05-16), XP086685749, ISSN: 0360-5442, [retrieved on 20210516], DOI: 10.1016/ J.ENERGY.2021.120946

## Description

[Technical Field]

This application claims the benefit of priority to Korean Patent Application No. 10-2022-0132265, filed on October 14, 2022.

The present invention relates to a heat absorption pack for a secondary battery module that can uniformly absorb thermal energy when the temperature inside the secondary battery module increases, to regulate the internal temperature change so as not to be to large, and to a secondary battery module having improved stability against temperature changes inside the module.

[Background Art]

In recent time, secondary batteries have been widely applied in small devices such as portable electronics, as well as in medium and large devices such as battery packs or power storage in hybrid or electric vehicles.

The secondary battery includes an electrode assembly including an anode, a cathode, a separator, an electrolyte, and a multilayer casing protecting the electrode assembly as a body. The secondary battery may also be used in the form of a battery module with a plurality of cells.

However, these secondary batteries are sensitive to changes in ambient temperature, and their electrical performance and safety can be highly dependent on it.

In one example, the electrode assemblies in a secondary battery generate heat during the charging and discharging process. This heat not only degrades the performance of the secondary battery cell, but also increases the temperature of the secondary battery cell itself, which can lead to cell explosion. A cell explosion can cause high temperatures and pressures on other nearby secondary cells, leading to a cascade of secondary cell explosions.

In order to suppress heat transfer to neighboring cells during thermal runaway situations in secondary batteries, thermal runaway prevention sheets have been developed in the prior art. For example, a technology has been developed to improve heat transfer efficiency by placing a cartridge containing a thermally conductive additive in the battery module. However, this prior art is designed to cool the heat generated during cell operation and does not function in thermal runaway situations such as cell explosions. In addition, technology has been developed that includes a cooling element that absorbs heat generated inside the secondary battery module and reduces the ambient temperature. However, in practice, thermal runaway is often caused by the overheating of a specific cell in the secondary battery module. In this case, it is difficult for the cooling element to absorb the heat generated by the cell uniformly, so the heat absorption process induces damage to the cooling element, which limits its ability to absorb enough internal heat.

Therefore, in a secondary battery module including a secondary battery, there is a need to develop a technology that can effectively and uniformly absorb the ambient temperature to prevent the temperature inside the secondary battery module from rising rapidly when the temperature inside the module, i.e., the ambient temperature of the secondary battery, is under a high temperature/heating condition that induces thermal runaway of the battery.

[Related-Art Document]

Korean Registered Patent Publication No. 10-2015-0000725

[Disclosure]

[Technical Problem]

Therefore, the present invention is directed to providing a technology that can suppress sudden temperature changes inside a secondary battery module by uniformly absorbing the generated heat in the event of heat generation inside the secondary battery module.

[Technical Solution]

To solve the problems described above,
in one exemplary embodiment, the present invention provides a heat absorbing pack for a secondary battery module comprising:

> a super absorbent matrix,
> a heat-dissipating substrate arranged on at least one side of the super absorbent matrix, and

a pouch accommodating the super absorbent matrix and the heat-dissipating substrate;
wherein the super absorbent matrix is impregnated with water,
wherein the heat-dissipating substrate includes a metal sheet that satisfies equation 1 below of 10 to 500:

$$[\text{Equation 1}].$$

$$T_{pack}/T_{sheet}$$

in Eq. 1 above,

$T_{pack}$ represents the average thickness of the heat absorbing pack (unit: $\mu$m),

$T_{sheet}$ represents the average thickness of the metal sheet (unit: $\mu$m).

In this case, the metal sheet may have an average thickness of 5 $\mu$m to 30 $\mu$m, and may include a metal having a thermal conductivity of 50 kcal/°C or more.

In addition, the heat-dissipating substrate may cover 70% or more of a surface of the super absorbent matrix.

Further, the super absorbent matrix may have the heat-dissipating substrate disposed on its surface such that the area directly in contact with the pouch is 30% or less of a total area of the super absorbent matrix.

Moreover, the super absorbent matrix may be a super absorbent polymer (SAP) or super absorbent fiber (SAF).

In addition, the super absorbent matrix may include one or more polymers selected from the following: polyacrylic acid, polyacrylate, polyacrylate graft polymer, starch, cross-linked carboxymethylated cellulose, acrylic acid copolymer, hydrolyzed starch-acrylonitrile graft copolymer, starch-acrylic acid graft copolymer, saponified vinyl acetate-acrylic acid ester copolymer, hydrolyzed acrylonitrile copolymer, hydrolyzed acrylamide copolymer, ethylene-maleic anhydride copolymer, isobutylene-maleic anhydride copolymer, polyvinylsulfonic acid, polyvinylphosphonic acid, polyvinylphosphoric acid, polyvinylsulfonic acid, sulfonated polystyrene, polyvinylamine, polydialkylaminoalkyl (meth)acrylamide, polyethyleneimine, polyallylamine, polyallylguanidine, polydimethyldialylammonium hydroxide, polystyrene derivatives, guanidine-modified polystyrene, poly(meth)acrylamide, polyvinylguanidine, and mixtures thereof.

Furthermore, the super absorbent matrix may in some cases further include a thermally conductive filler inside along with the resin.

These super absorbent matrices can contain from 10 g to 500 g of water per one gram of super absorbent matrix.

Further, in one exemplary embodiment, the present invention provides a secondary battery module comprising:

a housing member,
a plurality of battery cells inserted within the housing member, and
a heat absorbing pack according to the present invention that absorbs heat generated by the plurality of battery cells.

Here, the plurality of battery cells may be arranged in n rows (wherein n≥2), in which case the heat absorbing pack may be disposed between the rows formed by the arranged battery cells and/or in the space between the outer surface of the rows formed by the arranged battery cells and the housing member.

[Advantageous Effects]

A heat absorbing pack for a secondary battery module according to an aspect of the present invention has a structure including a super absorbent mat impregnated with water inside the pouch and a heat-dissipating substrate inserted between the super absorbent mat and the pouch, so that it can absorb a large amount of heat from the surroundings when heat is generated inside the secondary battery module. Therefore, when it is provided in a secondary battery module, it is possible to prevent the ambient temperature of the secondary battery from changing rapidly. Furthermore, the super absorbent matrix can be uniformly exposed to ambient thermal energy to prevent damage to the heat absorbing pack due to heat generation inside the module. Accordingly, the heat absorbing pack including the above can perform more stable temperature control inside the secondary battery module, which can improve the performance and stability of the secondary battery according to the ambient temperature.

[Brief Description of the Drawings]

FIG. 1 is a perspective view illustrating the structure of a secondary battery module according to an embodiment of the present invention.

FIG. 2 is an image of a disassembled heat absorbing pack of an exemplified embodiment after internal heating of the secondary battery module.

FIG. 3 is an image of the disassembled heat absorbing pack of a comparative example after internal heating of the secondary battery module.

[Detailed Description of the Preferred Embodiments]

Since various modifications and variations can be made in the present invention, particular embodiments will be described in detail in the detailed description.

It should be understood, however, that the invention is not intended to be limited to the particular embodiments, but includes all modifications, equivalents, and alternatives falling within the scope of the claims.

Throughout this specification, it should be understood that terms such as "include" or "have" are intended to indicate that there is a feature, number, step, operation, component, part, or a combination thereof described on the specification, and they do not exclude in advance the possibility of the presence or addition of one or more other features or numbers, steps, operations, components, parts or combinations thereof.

Further, when a portion such as a layer, a film, an area, a plate, or the like is referred to as being "on" another portion, this includes not only the case in which the portion is "directly on" the another portion but also the case in which still another portion is interposed therebetween. In contrast, when a portion such as a layer, a film, an area, a plate, or the like is referred to as being "below" another portion, this includes not only the case in which the portion is "directly below" the another portion but also the case in which still another portion is interposed therebetween. In addition, to be disposed "on" in the specification of the present invention may include the case disposed at the lower portion as well as the upper portion.

Hereinafter, an embodiment of the present invention will be described in more detail.

## Heat Absorbing Packs for Secondary Batteries

In one exemplary embodiment, the present invention provides a heat absorbing pack for a secondary battery module comprising:

a super absorbent matrix;
a heat-dissipating substrate disposed on at least one side of the super absorbent matrix; and
a pouch into which the super absorbent matrix in which the heat-dispersing substrate is disposed is inserted.

The heat absorbing pack according to an embodiment of the present invention is a component inserted into the interior of a secondary battery module and has a structure in which a super absorbent matrix impregnated with water is inserted into a pouch.

Here, the super absorbent matrix has a water-impregnated state, so that it can absorb a large amount of thermal energy depending on the ambient temperature condition of the heat absorbing pack, in other words, the internal temperature condition of the secondary battery module on which the heat absorbing pack is equipped. Specifically, the water is impregnated inside the super absorbent matrix and when the temperature outside the pouch increases, it vaporizes and separates from the super absorbent matrix. At this time, the water requires a lot of heat to vaporize, and in order to meet this requirement, it absorbs the heat around the pouch, thereby preventing the internal temperature from rising rapidly in case of heat generation inside the secondary battery module.

Here, the heat absorbing pack according to an embodiment of the present invention may have a heat-dissipating substrate disposed on at least one side of the super absorbent matrix to enable uniform absorption of heat by water impregnated in the super absorbent matrix.

By uniformly conducting heat from the outside of the pouch to the super absorbent matrix, the heat dissipating substrate can play a role in preventing the generated heat from being concentrated on a portion of the heat absorbing pack and damaging the heat absorbing pack.

For this purpose, the heat dissipation substrate may include a metal sheet having a high thermal conductivity, wherein the metal sheet may include a metal having a thermal conductivity of 50 kcal/°C or more. More specifically, the metal sheet may include a metal having a thermal conductivity of 70 kcal/°C or more, 80 kcal/°C or more, 90 kcal/°C or more, 100 kcal/°C or more, 50 kcal/°C to 400 kcal/°C, 70 kcal/°C to 370 kcal/°C, 70 kcal/°C to 150 kcal/°C, 100 kcal/°C to 370 kcal/°C, 150 kcal/°C to 200 kcal/°C, or 250 kcal/°C to 350 kcal/°C.

In one example, the metal sheet may include, alone or in combination, aluminum having a thermal conductivity of $196 \pm 3$ kcal/°C; tungsten having a thermal conductivity of $170 \pm 3$ kcal/°C; copper having a thermal conductivity of $320 \pm 3$ kcal/°C; nickel having a thermal conductivity of $77 \pm 3$ kcal/°C, and the like.

Furthermore, while the heat dissipating substrate includes a metal sheet with high thermal conductivity, the heat actually transported to the super absorbent matrix through the metal sheet may have a high dependence on the thickness of the metal sheet, as it must be distributed and transported across the surface of the super absorbent matrix. Therefore, the heat-dissipating substrate may have a predetermined thickness in order to transfer the heat around the pouch (i.e., outside the pouch) with high efficiency by means of a super absorbent matrix, and to distribute more uniformly the heat. Also, the heat-dissipating substrate may satisfy the condition of a certain thickness with respect to the heat absorbing pack, considering the reduction of the energy density of the secondary battery module due to the heat absorbing pack and the heat conduction efficiency of the metal sheet itself included in the heat-dissipating substrate.

As an example, the heat-dissipating substrate may have an average thickness of 5 $\mu$m to 100 $\mu$m, and the ratio of the average thickness of the heat absorbing pack including the heat-dissipating substrate to the average thickness of the heat-dissipating substrate may be 10 to 500 in accordance with the following expression 1:

$$[\text{Equation 1}].$$

$$T_{pack}/T_{sheet}$$

in Equation 1,

$T_{pack}$ represents the average thickness of the heat absorbing pack (unit: $\mu$m),

$T_{sheet}$ represents the average thickness of the metal sheet (unit: $\mu$m).

Specifically, Equation 1 means the ratio of the average thickness of the heat absorbing pack to the average thickness of the heat-dissipating substrate. By making the ratio satisfy a predetermined range, an embodiment of the present invention can prevent the energy density of the secondary cell module from being reduced, while efficiently dispersing and absorbing thermal energy into the heat absorbing pack without damaging the heat absorbing pack when an internal high temperature occurs. To achieve this, the heat-dissipating substrate satisfies the above equation 1 by 10 to 500, and more specifically can satisfy by 10 to 400; 10 to 300; 10 to 200; 10 to 100; 10 to 50; 100 to 300; or 100 to 200. By satisfying Eq. 1 as 10 or more, the heat-dissipating substrate can prevent the content of the super absorbent matrix from being reduced, thereby reducing the heat absorption efficiency, while by satisfying Eq. 1 as 500 or less, the heat-dissipating substrate can prevent the heat around the pouch from being non-uniformly distributed in the super absorbent matrix due to the thin thickness of the heat-dissipating substrate and damaging the heat absorbing pack.

Furthermore, the heat-dissipating substrate has an average thickness of 5 $\mu$m to 100 $\mu$m, and more specifically, may have an average thickness of 5 $\mu$m to 75 $\mu$m; 5 $\mu$m to 50 $\mu$m; 5 $\mu$m to 30 $\mu$m; 10 $\mu$m to 30 $\mu$m; or 15 $\mu$m to 25 $\mu$m.

By adjusting the average thickness of the heat-dissipating substrate to the above range, an embodiment of the present invention can prevent the heat absorbing pack from being damaged during heat absorption due to the inability to uniformly conduct the heat around the pouch to the super absorbent matrix due to a thin thickness of less than 5 $\mu$m, and prevent the thermal conductivity of the heat-dissipating substrate from being reduced due to an excessive thickness of more than 100 $\mu$m.

Further, the super absorbent matrix may have a heat-dissipating substrate disposed on a surface directly in contact with the pouch to satisfy a predetermined area ratio in order to absorb heat around the pouch more uniformly.

Specifically, the heat-dissipating substrate may be disposed to cover at least 70% of the entire surface of the super absorbent matrix, and more specifically, may be disposed to cover at least 75%, at least 80%, at least 85%, or at least 90% of the entire surface of the super absorbent matrix. In some cases, the heat-dissipating substrate may be disposed in front of the super absorbent matrix such that the area where the super absorbent matrix and the pouch are in direct contact is 0%. By adjusting the area ratio of the heat-dissipating substrate covering the surface of the super absorbent matrix to the above range, an embodiment of the present invention can enable the heat surrounding the pouch to be more uniformly distributed into the super absorbent matrix.

On the other hand, as mentioned above, the super absorbent matrix may have a separated form due to vaporization of the water impregnated therein when the heat absorbing pack is exposed to high temperature conditions, and thus the pouch in which the super absorbent matrix is inserted may have an expanded form.

The super absorbent matrix may comprise a super absorbent polymer (SAP) or a super absorbent fiber (SAF) to absorb water with high efficiency. Here, the super absorbent polymer (SAP) and super absorbent fiber (SAF) may be distinguished by their morphology. For example, the super absorbent polymer (SAP) may have a powdered shape, while the super absorbent fiber (SAF) may have a linear shape.

Furthermore, the super absorbent polymer (SAP) and super absorbent fiber (SAF) may have the same or different composition. Specifically, the super absorbent matrix is selected at least one of the following: polyacrylic acid, polyacrylate, polyacrylate graft polymer, starch, cross-linked carboxymethylated cellulose, acrylic acid copolymer, hydrolyzed starch-acrylonitrile graft copolymer, starch-acrylic acid graft copolymer, saponified vinyl acetate-acrylic acid ester copolymer, hydrolyzed acrylonitrile copolymer, hydrolyzed acrylamide copolymer, ethylene-maleic anhydride copolymer, isobutylene-maleic anhydride copolymer, polyvinylsulfonic acid, polyvinylphosphonic acid, polyvinylphosphoric acid, polyvinylsulfonic acid, sulfonated polystyrene, polyvinylamine, polydialkylaminoalkyl (meth)acrylamide, polyethyleneimine, polyallylamine, polyallylguanidine, polydimethyldialylammonium hydroxide, polystyrene derivatives, guanidine-modified polystyrene, poly(meth)acrylamide, polyvinylguanidine, and mixtures thereof.

In one example, the super absorbent matrix can be one or more selected from the group consisting of, but not limited to, cross-linked polyacrylic acid salts, cross-linked polyacrylic acid, and cross-linked acrylic acid copolymers.

The type of acrylic acid copolymer used as the super absorbent matrix in an embodiment of the present invention is not particularly limited, but may preferably be a copolymer containing an acrylic acid monomer and at least one co-monomer selected from maleic acid, itaconic acid, acrylamide, 2-acrylamide-2-methylpropanesulfonic acid, 2-(meth) acryloylethanesulfonic acid, 2-hydroxyethyl (meth)acrylate, and styrenesulfonic acid.

The components are substances having a reticular structure with hydrophilic functional groups, which can absorb water with high efficiency, so that the effect of heat absorption or exothermicity of the heat absorbing pack can be realized uniformly.

Furthermore, the super absorbent matrix can satisfy a certain range of water absorption. Specifically, the super absorbent matrix may have a water absorption of 10 g/g to 500 g/g, more specifically 50 g/g to 200 g/g, but is not limited thereto. This means that each 1 g of the super absorbent matrix can absorb from 10 g to 500 g of water, preferably from 50 g to 200 g. The more water the super absorbent matrix absorbs, the better the duration of the cooling effect, but when the amount exceeds 500 g/g, the fluidity of the super absorbent matrix increases, making it difficult to maintain its shape and therefore unable to provide effective cooling. Moreover, if the water absorption of the super absorbent matrix is less than 10 g/g, the amount of heat absorbed by the pouch depending on the outside temperature of the pouch will be significantly lower, so it may be ineffective in suppressing rapid changes in the internal temperature of the secondary battery module.

In addition, the super absorbent matrix may further include a thermally conductive filler inside the matrix to better transfer heat to the water impregnated inside the matrix.

The thermally conductive filler can be used without limitation as long as it has excellent heat transfer properties, but more specifically, one or more selected from the group consisting of an inorganic oxide filler, a metal hydroxide filler, an inorganic carbide filler, a nitride filler, a metal filler, and a carbon filler can be used.

Here, examples of the inorganic oxide filler include aluminum oxide, magnesium oxide, zinc oxide, or silicon oxide; examples of the metal hydroxide filler include aluminum hydroxide or magnesium hydroxide; and examples of the inorganic carbide filler include silicon carbide; examples of the nitride filler include aluminum nitride, boron nitride, or silicon nitride; examples of the metal filler include silver, copper, zinc, iron, aluminum, nickel, tin, or alloys thereof; and examples of the carbon filler include carbon or graphite.

In addition, the thermally conductive filler is not particularly limited in shape, but may have a spherical shape with a high specific surface area to effectively conduct heat within the super absorbent matrix, or a bedded or fibrous shape to form a thermal network with adjacent thermally conductive fillers.

Furthermore, the pouch may be applied without being particularly limited to a super absorbent matrix inserted therein that is capable of transferring external heat effectively. For example, the pouch may include a metal layer and an inner layer including a cross-linked polyolefin-based polymer on an inner surface of the metal layer.

The metal layer may include, for example, an aluminum layer that can conduct heat from the outside of the heat absorbing pack to the inside well, while having a certain strength to resist external forces.

Moreover, the inner layer may be located on the inner surface of the metal layer and perform a function of preventing the reaction of the metal layer of the pouch with water impregnated in the superabsorbent matrix. For this purpose, the inner layer may include a cross-linked polyolefin-based polymer. Cross-linked polyolefin-based polymers have low hygroscopicity, which can inhibit the penetration of water impregnated in the super absorbent matrix, and therefore may not cause swelling or erosion of the inner layer. Here, the polyolefin-based polymer may have a cross-linking degree of 10% to 70%, and more particularly, may have a cross-linking degree of 30% to 50%. Further, the polyolefin-based polymer may be one or more selected from polypropylene (PP) and polyethylene (PE), and the cross-linked polyolefin-based polymer may specifically include cross-linked polyethylene, cross-linked polypropylene, or a mixture thereof, and more specifically may be cross-linked polypropylene.

Furthermore, the heat absorbing pack may satisfy a certain thickness condition in order to effectively control the changing temperature inside the secondary battery module. Specifically, the heat absorbing pack may have a thickness of 0.1 mm to 50 mm, and more specifically, it may have a thickness of 0.1 mm to 30 mm; 0.1 mm to 15 mm; 0.1 mm to 10 mm; 1 mm to 20 mm; 5 mm to 10 mm; 10 mm to 20 mm; or 1 mm to 5 mm.

By adjusting the thickness of the heat absorbing pack to the above range, in the case of less than 0.1 mm, the temperature inside the secondary battery module may change rapidly due to insufficient entrance and exit of thermal energy around the heat absorbing pack due to an excessively thin heat absorbing pack thickness, and in the case of more than 50 mm, the thickness of the cell module may increase, resulting in a significant reduction in energy density.

By having the above-described configuration, the heat absorbing pack according to an embodiment of the present invention can not only absorb a large amount of heat from the surroundings in the event of heat generation inside the module, but can also uniformly supply the heat to the super absorbent matrix, thereby preventing damage to the heat absorbing pack due to heat generation inside the module. Therefore, if it is provided in the secondary battery module, it can prevent the ambient temperature of the secondary battery from changing rapidly, which can improve the performance and stability of the secondary battery according to the ambient temperature.

## Secondary Battery Module

Additionally, in one exemplary embodiment, the present invention provides a secondary battery module comprising:

a secondary battery and a heat absorbing pack for the secondary battery according to an embodiment of the invention described above.

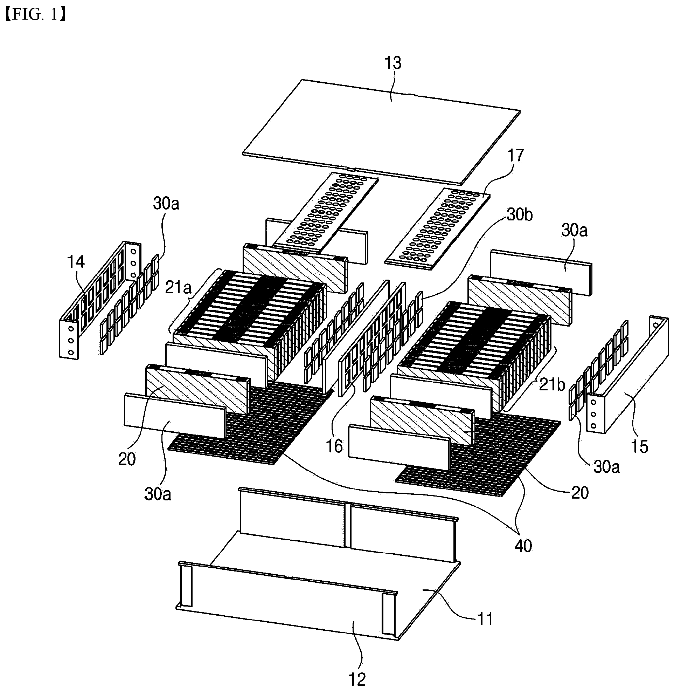

FIG. 1 is a perspective view of a structure of a secondary battery module 1 according to an embodiment of the present invention, which will be described in more detail with reference to FIG. 1.

A secondary battery module (1) according to an embodiment of the present invention includes a housing member (10); a plurality of battery cells (20) inserted within the housing member; and a heat absorbing pack (30) for absorbing heat generated by the plurality of battery cells.

The secondary battery module 1 according to an embodiment of the present invention includes a plurality of battery cells 20, and has the advantage of having a good stability to the temperature of the battery cells 20 by having the heat absorbing pack 30 of an embodiment of the present invention described above together with the battery cells, which can prevent the temperature inside the secondary battery module from rising rapidly.

The secondary battery module 1 according to an embodiment of the present invention includes a plurality of battery cells 20, and by having the aforementioned heat absorbing pack 30 of an embodiment of the present invention together with these battery cells, it is possible to prevent a rapid increase in temperature inside the secondary battery module, and thus has the advantage of good stability to the temperature of the battery cells 20.

Here, the housing member 10 serves as the body of a battery module in which a plurality of the secondary battery cells 20 are housed. Further, the housing member 10 is a member in which a plurality of the battery cells 20 are housed, which protects the battery cells 20 while transferring the electrical energy generated by the battery cells 20 to the outside.

For this purpose, the housing member 10 may include a bottom member 11 and a side wall member 12 and the like. The bottom member 11 supports the plurality of battery cells 20 on which the plurality of battery cells 20 are mounted. In addition, a heat sink 40 may be disposed between the bottom member 11 and the battery cell 20, and the heat sink 40 may be configured to transfer heat generated by the battery cell 20 to the bottom member 11, and the bottom member 11 may be configured to transfer heat received from the heat sink 40 to the outside for cooling.

Furthermore, the side wall member 12 forms a side portion of the housing member 10, which may allow heat generated by the battery cell 20 to be discharged to the outside.

The housing member 10 may further be configured to protect the top portion of the battery cell 20 by including a cover member 13 provided on the top of the side wall member 12. Furthermore, between the cover member 13 and the top portion of the battery cell 20, a gas venting member 17 may be included to discharge gases generated from the battery cell 20 to the outside during charging and discharging.

Additionally, the housing member 10 may include a front member 14 and a rear member 15 that are adjacent to the side wall member 12, and may thus be configured to wrap around the sides of the plurality of battery cells 20.

Further, the housing member 10 may also include additional configurations such as busbar members (not shown) that electrically connect the battery cells 20 to the outside.

On the other hand, the battery cell 20 may have any shape that can be applied as a lithium secondary battery, such as, but not limited to, an angular shape, a pouch shape, a cylindrical shape, and the like. As one example, the battery cell 20 may be a prismatic or pouch-type lithium secondary battery.

It is further contemplated that the battery cells 20 may be inserted within the housing member 10, but may be aligned and arranged in n rows (wherein n≥2) opposite the side wall members 12 of the housing member 10. Specifically, the battery cells 20 may be aligned and arranged in two or more rows, three or more rows, or two to four rows opposite the side wall members 12.

The battery cells 20 arranged in this manner may have heat absorbing packs 30 disposed at adjacent locations. In one example, the heat absorbing pack 30a may be disposed on the outer surface of the aligned battery cells 20, i.e., in the space between the housing member 10 and the battery cells 20.

As another example, a heat absorbing pack 30b may be inserted between the battery cells 20. Specifically, the heat absorbing pack 30b may be disposed between individual battery cells 20 forming a row, and in some cases, between a first row 21a and a second row 21b configured with aligned battery cells as shown in FIG. 1.

As such, by disposing the heat absorbing pack 30 in a location adjacent to the battery cell 20, if heat is generated in the battery cell 20, it can be absorbed immediately, thereby preventing rapid temperature changes within the secondary battery module.

Hereinafter, the present invention will be described in more detail by way of examples and experimental examples.

However, the following examples and experimental examples are only illustrative of the present invention, and the contents of the present invention are not limited to the following examples and experimental examples.

**Examples 1 to 4 and Comparative Examples 1 to 3. Fabrication of a Heat Absorbing Pack**

Water was impregnated at a rate of 10 g per 1 g of super absorbent fiber (component: acrylic acid copolymer). Then, aluminum sheets were placed on both sides of the super absorbent fiber as heat dissipation sheets.

Separately, an aluminum pouch with a width of 10 cm and a depth of 35 cm including an aluminum layer and a polyethylene (PE) layer with a cross-linking degree of $40 \pm 2\%$ on the inner side of the aluminum layer was prepared, and a super absorbent matrix with aluminum (Al) sheets arranged on both sides was inserted into the prepared aluminum pouch, and the inlet of the pouch was sealed after changing the interior to a vacuum state to produce a heat absorbing pack.

The ① average thickness of the metal sheet, ② the ratio of the average thickness of the heat absorbing pack to the average thickness of the metal sheet ($T_{pack}/T_{sheet}$), and ③ the percentage of the metal sheet covering the total area of the super absorbent fiber (i.e., area ratio) are shown in Table 1 below.

[Table 1]

| | ① average thickness [$\mu$m] | ② $T_{pack}/T_{sheet}$ (ratio) | ③ area ratio (%) |
|---|---|---|---|
| Example 1 | 20 | 150 | 100% |
| Example 2 | 20 | 150 | 80% |
| Example 3 | 20 | 150 | 50% |
| Example 4 | 100 | 30 | 100% |
| Comparative example 1 | - | - | - |
| Comparative example 2 | 1 | 3000 | 100% |
| Comparative example 3 | 20 | 5 | 100% |

**Experimental examples**

To evaluate the effectiveness of temperature control inside the secondary battery module by the heat absorbing pack according to an embodiment of the present invention, the following experiments were conducted.

A) Making a secondary battery module

In this case, the secondary battery module is inserted into the housing member in two rows of 10 secondary battery cells per row, as shown in FIG. 1, with each of the respective heat absorbing packs manufactured in the exemplary and comparative embodiments disposed between the outer surface of the battery cells and the respective rows.

In addition, in order to regulate the temperature inside the secondary battery module for experiments, the secondary battery module introduces a heating pad as a heating device instead of a heat sink at the bottom of any one row of the two rows in which the secondary battery cells are inserted, and a temperature sensor is mounted on one of the sides of the secondary battery module and on the top of the secondary battery module, respectively.

Furthermore, the cells to be inserted into the secondary battery module were prepared by preparing 40 anodes and cathodes each, and 120 porous polyethylene separators (9.5 cm across X 34.5 cm long, average thickness: about 20 $\mu$m) wider than the above anodes and cathodes as separators, and then 40 unit cells for the stack of separator-cathode-separator-anode-separator-anode-separator were stacked to form a rectangular shape of 10 cm across $\times$ 35 cm long $\times$ 1.6 cm thick. Here, the electrolyte injected into each battery cell was a liquid electrolyte to which $LiPF_6$ as a lithium salt was added at a concentration of 1 M in an organic solvent mixed with Ethylene Carbonate (EC) and Ethyl Methyl Carbonate (EMC) in a volume ratio of 3:7, and each fabricated battery cell was inserted into the housing member in a fully charged state.

B) Testing for safety under high temperature conditions

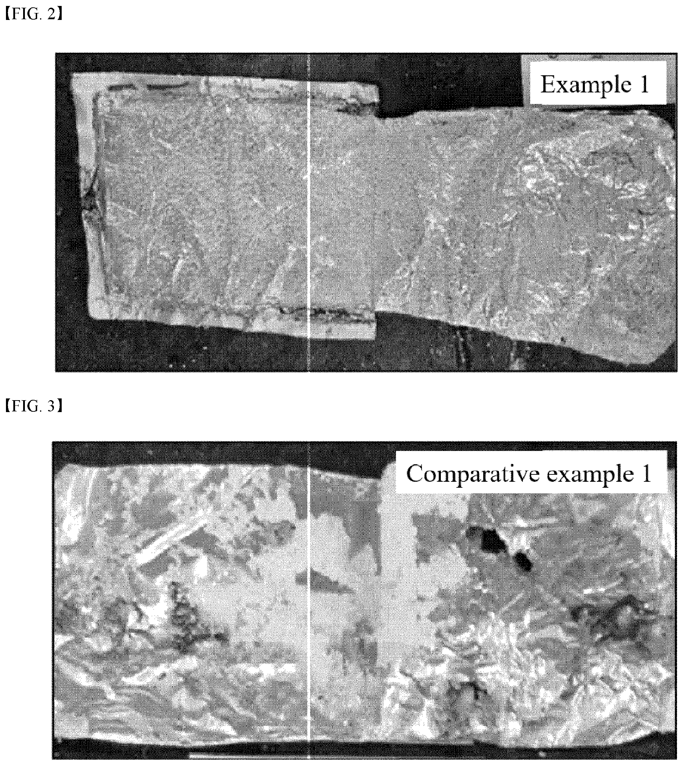

To test the safety under high temperature conditions, the internal temperature was increased at a rate of 5°C/min for 30 minutes using a heating pad mounted on the secondary battery module. ⓐ After heating the inside of the secondary battery module for 30 minutes, the internal temperature was measured using two temperature sensors installed inside the secondary battery module, and the average temperature was calculated as the internal temperature of the secondary battery module. ⓑ Once the temperature measurements were completed, the heating pad was turned off and the secondary battery module was cooled to room temperature, and then the secondary battery module was disassembled to visually assess the damage to the super absorbent fibers inserted into the pouch. The results are shown in Table 2 and Fig. 2 and Fig. 3 below, and the damage of the super absorbent fiber is indicated by ○ for damaged and X for undamaged.

[Table 2]

|  | Average temperature inside the secondary battery module | Damage to super absorbent fiber |
|---|---|---|
| Example 1 | 105±1°C | X |
| Example 2 | 110±1°C | X |
| Example 3 | 125±1°C | X |
| Example 4 | 115±1°C | X |
| Comparative example 1 | 150±1°C | ○ |
| Comparative example 2 | 140±1°C | ○ |
| Comparative example 3 | 145±1°C | X |

As shown in Table 2 above, it can be seen that the heat absorbing pack of the example embodiment according to the present invention reliably suppresses the rapid temperature rise inside the battery module.

Specifically, the heat absorbing pack of the example embodiment was found to absorb heat from internal heating by a heating pad mounted inside the secondary battery module, thereby maintaining the temperature inside the secondary battery module below about 130°C. Furthermore, as shown in FIG. 2, it has been confirmed that the heat absorbing pack of the example embodiment does not cause internal damage to the super absorbent fiber inserted inside the pouch, as the super absorbent fiber absorbs heat evenly around the pouch.

On the other hand, the heat absorbing pack of the comparative example not only does not sufficiently absorb the thermal energy inside the module because a metal sheet, i.e., an aluminum (Al) sheet, is not arranged between the pouch and the super absorbent fiber or does not satisfy the thickness condition of an embodiment of the present invention, but also, as shown in FIG. 3, internal damage to both the super absorbent fiber and the pouch occurs when absorbing heat, so that the heat absorption of the heat absorbing pack cannot be performed stably.

From these results, it can be seen that the heat absorbing pack according to an embodiment of the present invention can absorb a large amount of heat inside the module under high temperature conditions, to prevent the temperature inside the secondary battery module from changing rapidly, and since the heat is uniformly absorbed inside the heat absorbing pack, damage to the heat absorbing pack can be prevented during the heat absorption process, resulting in a more stable temperature control inside the secondary battery module.

Although the present invention has been described above with reference to preferred embodiments of the invention, it will be understood by those skilled in the art or having ordinary knowledge of the art that various modifications and equivalent arrangement can be made to the invention without deviating from the field of thought and technology described in the patent claims that will follow.

Accordingly, the technical scope of the invention is not limited to what is described in the detailed description of the specification, but must be determined by the claims of the patent.

[Description of Reference Numerals]

1:      secondary battery module
10:    housing member            11:    bottom member
12:    side wall member          13:    cover member

(continued)

| | | | | |
|---|---|---|---|---|
| 14: | front member | | 15: | rear member |
| 16: | partition wall member | | 17: | gas venting member |
| 20: | battery cells | | 21: | row configured with aligned battery cell |
| 21a: | first row configured with aligned battery cell | | | |
| 21b: | second row configured with aligned battery cell | | | |
| 30: | heat absorbing pack | | | |
| 30a: | heat absorbing pack disposed on the outer surface of the battery cell | | | |
| 30b: | heat absorbing pack disposed between individual battery cells forming a row | | | |
| 40: | heat sink | | | |

**Claims**

1. A heat absorbing pack (30) for a secondary battery module (1) comprising:

   a super absorbent matrix,
   a heat-dissipating substrate arranged on at least one side of the super absorbent matrix, and
   a pouch accommodating the super absorbent matrix and the heat-dissipating substrate;
   wherein the super absorbent matrix is impregnated with water,
   wherein the heat-dissipating substrate includes a metal sheet that satisfies Equation 1 below of 10 to 500:

$$[\text{Equation 1}].$$

$$T_{pack}/T_{sheet}$$

   In Equation 1 above,
   $T_{pack}$ represents an average thickness of the heat absorbing pack (30), unit is $\mu$m,
   $T_{sheet}$ represents an average thickness of the metal sheet, unit is $\mu$m,
   wherein the average thickness of the metal sheet is in a range of 5 $\mu$m to 100 $\mu$m.

2. The heat absorbing pack (30) for secondary battery module (1) of claim 1, wherein the metal sheet comprises a metal having a thermal conductivity of 50 kcal/°C or more.

3. The heat absorbing pack (30) for secondary battery module (1) of claim 1, wherein the heat-dissipating substrate covers 70% or more of a surface of the super absorbent matrix.

4. The heat absorbing pack (30) for secondary battery module (1) of claim 1, wherein the super absorbent matrix is a super absorbent polymer (SAP) or super absorbent fiber (SAF).

5. The heat absorbing pack (30) for secondary battery module (1) of claim 1, the super absorbent matrix comprises one or more polymers selected from polyacrylic acid, polyacrylate, a polyacrylate graft polymer, starch, cross-linked carboxymethylated cellulose, an acrylic acid copolymer, a hydrolyzed starch-acrylonitrile graft copolymer, a starch-acrylic acid graft copolymer, a saponified vinyl acetate-acrylic acid ester copolymer, a hydrolyzed acrylonitrile copolymer, a hydrolyzed acrylamide copolymer, an ethylene-maleic anhydride copolymer, an isobutylene-maleic anhydride copolymer, polyvinylsulfonic acid, polyvinylphosphonic acid, polyvinylphosphoric acid, polyvinylsulfonic acid, sulfonated polystyrene, polyvinylamine, polydialkylaminoalkyl (meth)acrylamide, polyethyleneimine, polyallylamine, polyallylguanidine, polydimethyldialylammonium hydroxide, polystyrene derivatives, guanidine-modified polystyrene, poly(meth)acrylamide, polyvinylguanidine, or a mixture thereof.

6. The heat absorbing pack (30) for secondary battery module (1) of claim 1, wherein the super absorbent matrix further comprises a thermally conductive filler.

7. The heat absorbing pack (30) for secondary battery module (1) of claim 1, wherein at least one gram of the super absorbent matrix accommodates water in an amount ranging from 10 g to 500 g.

8. The secondary battery module (1) comprising:

a housing member (10);
a plurality of battery cells (20) accommodated within the housing member (10); and
the heat absorbing pack (30) according to the claim 1 configured to absorb heat generated by the plurality of battery cells (20).

9. The secondary battery module (1) of claim 8, wherein the plurality of battery cells (20) is arranged in n rows, wherein n ≥ 2, and
wherein the heat absorbing pack (30) is disposed between the n rows formed by the arranged battery cells (20).

10. The secondary battery module (1) of claim 8, wherein the plurality of battery cells (20) is arranged in n rows, wherein n ≥ 2, and
wherein the heat absorbing pack (30) is disposed in a space between an outer surface of the n rows formed by the arranged battery cells and the housing member (10).

**Patentansprüche**

1. Wärmeabsorbierendes Pack (30) für ein Sekundärbatteriemodul (1), umfassend:

eine superabsorbierende Matrix,
ein wärmeableitendes Substrat, das auf mindestens einer Seite der superabsorbierenden Matrix angeordnet ist, und
einen Beutel, der die superabsorbierende Matrix und das wärmeableitende Substrat aufnimmt;
wobei die superabsorbierende Matrix mit Wasser imprägniert ist,
wobei das wärmeableitende Substrat ein Metallblech enthält, das die nachstehende Gleichung 1 von 10 bis 500 erfüllt:

[Gleichung 1].

$$\frac{T_{\text{pack}}}{T_{\text{sheet}}}$$

in der obigen Gleichung 1
stellt $T_{\text{pack}}$ eine durchschnittliche Dicke des wärmeabsorbierenden Packs (30) dar, wobei die Einheit $\mu$m ist,
stellt $T_{\text{sheet}}$ eine durchschnittliche Dicke des Metallblechs dar, wobei die Einheit $\mu$m ist,
wobei die durchschnittliche Dicke des Metallblechs in einem Bereich von 5 $\mu$m bis 100 $\mu$m liegt.

2. Wärmeabsorbierendes Pack (30) für ein Sekundärbatteriemodul (1) nach Anspruch 1, wobei das Metallblech ein Metall mit einer Wärmeleitfähigkeit von 50 kcal/°C oder mehr umfasst.

3. Wärmeabsorbierendes Pack (30) für ein Sekundärbatteriemodul (1) nach Anspruch 1, wobei das wärmeableitende Substrat 70 % oder mehr einer Oberfläche der superabsorbierenden Matrix bedeckt.

4. Wärmeabsorbierendes Pack (30) für ein Sekundärbatteriemodul (1) nach Anspruch 1, wobei die superabsorbierende Matrix ein superabsorbierendes Polymer (SAP) oder eine superabsorbierende Faser (SAF) ist.

5. Wärmeabsorbierendes Pack (30) für ein Sekundärbatteriemodul (1) nach Anspruch 1, wobei die superabsorbierende Matrix ein oder mehrere Polymere umfasst, die ausgewählt sind aus Polyacrylsäure, Polyacrylat, einem Polyacrylat-Pfropfpolymer, Stärke, vernetzter carboxymethylierter Cellulose, einem Acrylsäure-Copolymer, einem hydrolysierten Stärke-Acrylnitril-Pfropfcopolymer, einem Stärke-Acrylsäure-Pfropfcopolymer, einem verseiften Vinylacetat-Acrylsäureester-Copolymer, einem hydrolysierten Acrylnitril-Copolymer, einem hydrolysierten Acrylamid-Copolymer, einem Ethylen-Maleinsäureanhydrid-Copolymer, einem Isobutylen-Maleinsäureanhydrid-Copolymer, Polyvinylsulfonsäure, Polyvinylphosphonsäure, Polyvinylphosphorsäure, Polyvinylsulfonsäure, sulfoniertem Polystyrol, Polyvinylamin, Polydialkylaminoalkyl(meth)acrylamid, Polyethylenimin, Polyallylamin, Polyallylguanidin, Polydimethyldialylammoniumhydroxid, Polystyrolderivaten, Guanidin-modifiziertem Polystyrol, Poly(meth)acrylamid, Polyvinylguanidin oder einer Mischung davon.

6. Wärmeabsorbierendes Pack (30) für ein Sekundärbatteriemodul (1) nach Anspruch 1, wobei die superabsorbierende Matrix ferner einen thermisch leitfähigen Füllstoff umfasst.

7. Wärmeabsorbierendes Pack (30) für ein Sekundärbatteriemodul (1) nach Anspruch 1, wobei mindestens ein Gramm der superabsorbierenden Matrix Wasser in einer Menge im Bereich von 10 g bis 500 g aufnimmt.

8. Sekundärbatteriemodul (1), umfassend:

ein Gehäuseelement (10);
eine Vielzahl von Batteriezellen (20), die innerhalb des Gehäuseelements (10) untergebracht sind; und
das wärmeabsorbierende Pack (30) nach Anspruch 1, das dazu konfiguriert ist, von der Vielzahl von Batteriezellen (20) erzeugte Wärme zu absorbieren.

9. Sekundärbatteriemodul (1) nach Anspruch 8, wobei die Vielzahl von Batteriezellen (20) in n Reihen angeordnet ist, wobei n ≥ 2, und
wobei das wärmeabsorbierende Pack (30) zwischen den n Reihen angeordnet ist, die durch die angeordneten Batteriezellen (20) gebildet werden.

10. Sekundärbatteriemodul (1) nach Anspruch 8, wobei die Vielzahl von Batteriezellen (20) in n Reihen angeordnet ist, wobei n ≥ 2, und
wobei das wärmeabsorbierende Pack (30) in einem Raum zwischen einer Außenfläche der n Reihen, die durch die angeordneten Batteriezellen gebildet werden, und dem Gehäuseelement (10) angeordnet ist.

**Revendications**

1. Sachet thermo-absorbant (30) pour un module de batterie secondaire (1) comprenant :

une matrice super-absorbante,
un substrat de dissipation de chaleur agencé sur au moins un côté de la matrice super-absorbante, et
une poche recevant la matrice super-absorbante et le substrat de dissipation de chaleur ;
dans lequel la matrice super-absorbante est imprégnée d'eau,
dans lequel le substrat de dissipation de chaleur inclut une feuille métallique qui satisfait l'équation 1 ci-dessous de 10 à 500 :

[Équation 1].

$$\frac{T_{\text{pack}}}{T_{\text{sheet}}}$$

Dans l'équation 1 ci-dessus,
$T_{\text{pack}}$ représente une épaisseur moyenne du sachet thermo-absorbant (30), l'unité est $\mu$m,
$T_{\text{sheet}}$ représente une épaisseur moyenne de la feuille métallique, l'unité est $\mu$m,
dans lequel l'épaisseur moyenne de la feuille métallique est dans une plage de 5 $\mu$m à 100 $\mu$m.

2. Sachet thermo-absorbant (30) pour module de batterie secondaire (1) selon la revendication 1, dans lequel la feuille métallique comprend un métal ayant une conductivité thermique de 50 kcal/°C ou plus.

3. Sachet thermo-absorbant (30) pour module de batterie secondaire (1) selon la revendication 1, dans lequel le substrat de dissipation de chaleur couvre 70 % ou plus d'une surface de la matrice super-absorbante.

4. Sachet thermo-absorbant (30) pour module de batterie secondaire (1) selon la revendication 1, dans lequel la matrice super-absorbante est un polymère super-absorbant (SAP) ou une fibre super-absorbante (SAF).

**5.** Sachet thermo-absorbant (30) pour module de batterie secondaire (1) selon la revendication 1, la matrice super-absorbante comprend un ou plusieurs polymères choisis parmi l'acide polyacrylique, le polyacrylate, un polymère greffé de polyacrylate, l'amidon, la cellulose carboxyméthylée réticulée, un copolymère d'acide acrylique, un copolymère greffé d'amidon-acrylonitrile hydrolysé, un copolymère greffé d'amidon-acide acrylique, un copolymère d'acétate de vinyle-ester d'acide acrylique saponifié, un copolymère d'acrylonitrile hydrolysé, un copolymère d'acrylamide hydrolysé, un copolymère d'éthylène-anhydride maléique, un copolymère d'isobutylène-anhydride maléique, l'acide polyvinylsulfonique, l'acide polyvinylphosphonique, l'acide polyvinylphosphorique, l'acide polyvinylsulfonique, le polystyrène sulfoné, la polyvinylamine, le poly(méth)acrylamide de polydialkylaminoalkyle, la polyéthylèneimine, la polyallylamine, la polyallylguanidine, l'hydroxyde de polydiméthyldialylammonium, les dérivés de polystyrène, le polystyrène modifié par de la guanidine, le poly(méth)acrylamide, la polyvinylguanidine, ou un mélange de ceux-ci.

**6.** Sachet thermo-absorbant (30) pour module de batterie secondaire (1) selon la revendication 1, dans lequel la matrice super-absorbante comprend en outre une charge thermiquement conductrice.

**7.** Sachet thermo-absorbant (30) pour module de batterie secondaire (1) selon la revendication 1, dans lequel au moins un gramme de la matrice super-absorbante contient de l'eau en une quantité allant de 10 g à 500 g.

**8.** Le module de batterie secondaire (1) comprenant :

un élément de boîtier (10) ;
une pluralité de cellules de batterie (20) logées à l'intérieur de l'élément de boîtier (10) ; et
le sachet thermo-absorbant (30) selon la revendication 1 configuré pour absorber la chaleur générée par la pluralité de cellules de batterie (20).

**9.** Module de batterie secondaire (1) selon la revendication 8, dans lequel la pluralité de cellules de batterie (20) est agencée en n rangées, où n ≥ 2, et
dans lequel le sachet thermo-absorbant (30) est disposé entre les n rangées formées par les cellules de batterie agencées (20).

**10.** Module de batterie secondaire (1) selon la revendication 8, dans lequel la pluralité de cellules de batterie (20) est agencée en n rangées, où n ≥ 2, et
dans lequel le sachet thermo-absorbant (30) est disposé dans un espace entre une surface extérieure des n rangées formées par les cellules de batterie agencées et l'élément de boîtier (10).

【FIG. 1】

【FIG. 2】

Example 1

【FIG. 3】

Comparative example 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220132265

- KR 1020150000725